# EUROPEAN PATENT APPLICATION

(11) **EP 4 827 204 A1**
(43) Date of publication of application: **21.10.2026**
(21) Application number: 24902356.5
(22) Date of filing: 22.10.2024
(51) Int. Cl.: H04W 72/12, H04W 72/04

(54) **CROSS-NODE SCHEDULING METHOD AND APPARATUS, TERMINAL AND NETWORK DEVICE**

(30) Priority: 15.12.2023 CN 202311733700
(71) Applicant: Datang Mobile Communications Equipment Co., Ltd., Beijing 100085 (CN)
(72) Inventor: CHEN, Li, Beijing 100085 (CN); ZHAO, Jinbo, Beijing 100085 (CN); FANG, Liang, Beijing 100085 (CN); LIU, Haitao, Beijing 100085 (CN); SUN, Shaohui, Beijing 100085 (CN)
(74) Representative: dompatent
(86) International application number: PCT/CN2024/126349
(87) International publication number: WO 2025/123930

(57) **Abstract**

This disclosure provides a cross-node scheduling method, apparatus, terminal, and network device. The method includes: a terminal receiving a dynamic scheduling information sent by a source network node; the dynamic scheduling information being used to activate a transmission resource and/or to schedule a transmission resource, the transmission resource being for data transmission between the terminal and a target network node; and the terminal performing data transmission with the target network node according to the transmission resource.

## Description

### CROSS-REFERENCE TO RELATED APPLICATIONS

This application claims priority to Chinese Patent Application No. 202311733700.7, filed in China on December 15, 2023, and entitled "Cross-Node Scheduling Method, Apparatus, Terminal, and Network Device." The disclosure of the aforementioned application is incorporated herein by reference in its entirety.

### TECHNICAL FIELD

The present disclosure relates to the field of communication technologies, and in particular, to a cross-node scheduling method, apparatus, terminal, and network device.

### BACKGROUND

In wireless mobile communication systems in the related art, carrier aggregation (CA) is introduced to achieve cross-carrier scheduling. However, CA-based cross-carrier scheduling must satisfy the following conditions: multiple cells subject to cross-carrier scheduling belong to one base station; the cells included in CA share one medium access control (MAC) entity for scheduling. The multiple cells and configurations of the cells have been used to a terminal (i.e., the terminal knows uplink and downlink resource configurations of the cells included in the CA and other scheduling-related configurations), and the carriers that can be scheduled must be activated.

In the related art, only CA can achieve cross-cell scheduling, but it has many limitations. Sixth-generation mobile communication technology (6G) aims to implement a user-centric network, which requires cross-node scheduling between arbitrary nodes to achieve on-demand dynamic use of physical layer resources. Therefore, the cross-cell scheduling method in the related art is not applicable to 6G systems.

### SUMMARY

An objective of this disclosure is to provide a cross-node scheduling method, apparatus, terminal, and network device, which solves the problem of cross-node scheduling in 6G systems.

Embodiments of this disclosure provide a cross-node scheduling method, including:
a terminal receiving a dynamic scheduling information sent by a source network node; the dynamic scheduling information being used to activate a transmission resource and/or to schedule a transmission resource, the transmission resource being for data transmission between the terminal and a target network node; and
the terminal performing data transmission with the target network node according to the transmission resource.

In some embodiments, the dynamic scheduling information is carried by a medium access control (MAC) layer control signaling, and/or the dynamic scheduling information is carried by a physical downlink control channel (PDCCH).

In some embodiments, the dynamic scheduling information includes at least one of the following information:
an identifier of the target network node;
random access resource indication information;
a transmission resource allocated by a network node;
transmission delay indication information;
a downlink timing offset;
an uplink timing advance;
activation state information of the source network node after the terminal receives the dynamic scheduling information; and
an activated bandwidth part (BWP) of the target network node.

In some embodiments, the random access resource indication information includes:
indication information for initiating a contention-free random access, including information of a resource for the contention-free random access; or
indication information for initiating a contention-based random access.

In some embodiments, the transmission resource allocated by the network node is determined based on configuration information of the source network node, or determined based on configuration information of the target network node;
the configuration information includes at least: physical layer resource configuration information and/or scheduling parameter configuration information.

In some embodiments, the transmission delay indication information is used to indicate a transmission time of data transmission indicated by the dynamic scheduling information;
the transmission delay indication information includes at least one of the following:
an offset value of a transmission time of the data transmission indicated by the dynamic scheduling information relative to a transmission time of the dynamic scheduling information;
an activation time of the target network node and a transmission delay value; and
an absolute time when the data transmission indicated by the dynamic scheduling information takes effect.

In some embodiments, when the dynamic scheduling information does not include the activated BWP of the target network node, the method further includes:
determining that a target BWP is the activated BWP of the target network node, the target BWP including one of the following:
an initial BWP of the target network node;
a preset BWP; and
a first pre-configured BWP.

In some embodiments, before receiving the dynamic scheduling information sent by the source network node, the method further includes:
obtaining random access resource configuration information of one or more candidate network nodes, the target network node being one or more network nodes among the candidate network nodes;
the performing data transmission with the target network node according to the transmission resource includes:
   initiating a random access at the target network node according to a first random access resource indicated by the dynamic scheduling information, and performing data transmission with the target network node;
   wherein the first random access resource is determined according to a random access resource configuration of the target network node.

In some embodiments, the performing data transmission with the target network node according to the transmission resource includes:
initiating a random access with the target network node at the source network node according to a second random access resource indicated by the dynamic scheduling information, and performing data transmission with the target network node;
wherein the second random access resource is determined according to a random access resource configuration of the source network node.

In some embodiments, before receiving the dynamic scheduling information sent by the source network node, the method further includes:
obtaining configuration information of one or more candidate network nodes, the target network node being one or more network nodes among the candidate network nodes; the configuration information of the candidate network nodes including at least: physical layer resource configuration information of the candidate network nodes and/or scheduling parameter configuration information of the candidate network nodes;
the performing data transmission with the target network node according to the transmission resource includes:
   performing data transmission with the target network node according to a first allocated resource indicated by the dynamic scheduling information;
   wherein the first allocated resource is determined based on configuration information of the target network node.

In some embodiments, the performing data transmission with the target network node according to the transmission resource includes:
performing data transmission with the target network node according to a second allocated resource indicated by the dynamic scheduling information;
wherein the second allocated resource is determined based on configuration information of the source network node, the configuration information of the source network node including at least: physical layer resource configuration information of the source network node and/or scheduling parameter configuration information of the source network node.

Embodiments of this disclosure provide a cross-node scheduling method, including:
a source network node sending a dynamic scheduling information to a terminal; the dynamic scheduling information being used to activate a transmission resource and/or to schedule a transmission resource, the transmission resource being for data transmission between the terminal and a target network node.

In some embodiments, the dynamic scheduling information is carried by a medium access control (MAC) layer control signaling, and/or the dynamic scheduling information is carried by a PDCCH.

In some embodiments, the dynamic scheduling information includes at least one of the following information:
an identifier of the target network node;
random access resource indication information;
a transmission resource allocated by a network node;
transmission delay indication information;
a downlink timing offset;
an uplink timing advance;
activation state information of the source network node after the terminal receives the dynamic scheduling information; and
an activated BWP of the target network node.

In some embodiments, the random access resource indication information includes:
indication information for initiating a contention-free random access, including information of a resource for the contention-free random access; or
indication information for initiating a contention-based random access.

In some embodiments, the transmission resource allocated by the network node is determined based on configuration information of the source network node, or determined based on configuration information of the target network node;
the configuration information includes at least: physical layer resource configuration information and/or scheduling parameter configuration information.

In some embodiments, the transmission delay indication information is used to indicate a transmission time of data transmission indicated by the dynamic scheduling information;
the transmission delay indication information includes at least one of the following:
an offset value of a transmission time of the data transmission indicated by the dynamic scheduling information relative to a transmission time of the dynamic scheduling information;
an activation time of the target network node and a transmission delay value; and
an absolute time when the data transmission indicated by the dynamic scheduling information takes effect.

In some embodiments, when the dynamic scheduling information indicates a random access resource, the random access resource is determined according to a random access resource configuration of the source network node, or determined according to a random access resource configuration of the target network node.

In some embodiments, the method further includes:
sending random access resource configuration information of one or more candidate network nodes to the terminal; the target network node being one or more network nodes among the candidate network nodes.

In some embodiments, when the dynamic scheduling information indicates a transmission resource allocated by a network node, the transmission resource allocated by the network node is determined based on configuration information of the target network node, or determined based on configuration information of the source network node;
the configuration information includes at least: physical layer resource configuration information and/or scheduling parameter configuration information.

In some embodiments, the method further includes:
sending configuration information of one or more candidate network nodes to the terminal, the target network node being one or more network nodes among the candidate network nodes;
the configuration information of the candidate network nodes including at least: physical layer resource configuration information of the candidate network nodes and/or scheduling parameter configuration information of the candidate network nodes.

In some embodiments, the method further includes:
sending first information to the target network node, the first information including related information of the transmission resource.

Embodiments of this disclosure provide a terminal, including: a memory, a transceiver, and a processor:
the memory being used to store a computer program; the transceiver being used to receive and send data under control of the processor; the processor being used to read the computer program in the memory and execute the following operations:
receiving a dynamic scheduling information sent by a source network node; the dynamic scheduling information being used to activate a transmission resource and/or to schedule a transmission resource, the transmission resource being for data transmission between the terminal and a target network node; and
performing data transmission with the target network node according to the transmission resource.

In some embodiments, the dynamic scheduling information is carried by a medium access control (MAC) layer control signaling, and/or the dynamic scheduling information is carried by a physical downlink control channel (PDCCH).

In some embodiments, the dynamic scheduling information includes at least one of the following information:
an identifier of the target network node;
random access resource indication information;
a transmission resource allocated by a network node;
transmission delay indication information;
a downlink timing offset;
an uplink timing advance;
activation state information of the source network node after the terminal receives the dynamic scheduling information; and
an activated bandwidth part (BWP) of the target network node.

In some embodiments, the random access resource indication information includes:
indication information for initiating a contention-free random access, including information of a resource for the contention-free random access; or
indication information for initiating a contention-based random access.

In some embodiments, the transmission resource allocated by the network node is determined based on configuration information of the source network node, or determined based on configuration information of the target network node;
the configuration information includes at least: physical layer resource configuration information and/or scheduling parameter configuration information.

In some embodiments, the transmission delay indication information is used to indicate a transmission time of data transmission indicated by the dynamic scheduling information;
the transmission delay indication information includes at least one of the following:
an offset value of a transmission time of the data transmission indicated by the dynamic scheduling information relative to a transmission time of the dynamic scheduling information;
an activation time of the target network node and a transmission delay value; and
an absolute time when the data transmission indicated by the dynamic scheduling information takes effect.

In some embodiments, the processor is used to read the computer program in the memory and execute the following operation:
determining that a target BWP is the activated BWP of the target network node, the target BWP including one of the following:
an initial BWP of the target network node;
a preset BWP; and
a first pre-configured BWP.

In some embodiments, the processor is used to read the computer program in the memory and execute the following operations:
obtaining random access resource configuration information of one or more candidate network nodes, the target network node being one or more network nodes among the candidate network nodes;
the performing data transmission with the target network node according to the transmission resource includes:
   initiating a random access at the target network node according to a first random access resource indicated by the dynamic scheduling information, and performing data transmission with the target network node;
   wherein the first random access resource is determined according to a random access resource configuration of the target network node.

In some embodiments, the processor is used to read the computer program in the memory and execute the following operation:
initiating a random access with the target network node at the source network node according to a second random access resource indicated by the dynamic scheduling information, and performing data transmission with the target network node;
wherein the second random access resource is determined according to a random access resource configuration of the source network node.

In some embodiments, the processor is used to read the computer program in the memory and execute the following operations:
obtaining configuration information of one or more candidate network nodes, the target network node being one or more network nodes among the candidate network nodes; the configuration information of the candidate network nodes including at least: physical layer resource configuration information of the candidate network nodes and/or scheduling parameter configuration information of the candidate network nodes;
performing data transmission with the target network node according to a first allocated resource indicated by the dynamic scheduling information;
wherein the first allocated resource is determined based on configuration information of the target network node.

In some embodiments, the processor is used to read the computer program in the memory and execute the following operation:
performing data transmission with the target network node according to a second allocated resource indicated by the dynamic scheduling information;
wherein the second allocated resource is determined based on configuration information of the source network node, the configuration information of the source network node including at least: physical layer resource configuration information of the source network node and/or scheduling parameter configuration information of the source network node.

Embodiments of this disclosure provide a network device, including: a memory, a transceiver, and a processor:
the memory being used to store a computer program; the transceiver being used to receive and send data under control of the processor; the processor being used to read the computer program in the memory and execute the following steps:
sending a dynamic scheduling information to a terminal; the dynamic scheduling information being used to activate a transmission resource and/or to schedule a transmission resource, the transmission resource being for data transmission between the terminal and a target network node.

In some embodiments, the dynamic scheduling information is carried by a medium access control (MAC) layer control signaling, and/or the dynamic scheduling information is carried by a physical downlink control channel (PDCCH).

In some embodiments, the dynamic scheduling information includes at least one of the following information:
an identifier of the target network node;
random access resource indication information;
a transmission resource allocated by a network node;
transmission delay indication information;
a downlink timing offset;
an uplink timing advance;
activation state information of the source network node after the terminal receives the dynamic scheduling information; and
an activated bandwidth part (BWP) of the target network node.

In some embodiments, the random access resource indication information includes:
indication information for initiating a contention-free random access, including information of a resource for the contention-free random access; or
indication information for initiating a contention-based random access.

In some embodiments, the transmission resource allocated by the network node is determined based on configuration information of the source network node, or determined based on configuration information of the target network node;
the configuration information includes at least: physical layer resource configuration information and/or scheduling parameter configuration information.

In some embodiments, the transmission delay indication information is used to indicate a transmission time of data transmission indicated by the dynamic scheduling information;
the transmission delay indication information includes at least one of the following:
an offset value of a transmission time of the data transmission indicated by the dynamic scheduling information relative to a transmission time of the dynamic scheduling information;
an activation time of the target network node and a transmission delay value; and
an absolute time when the data transmission indicated by the dynamic scheduling information takes effect.

In some embodiments, when the dynamic scheduling information indicates a random access resource, the random access resource is determined according to a random access resource configuration of the source network node, or determined according to a random access resource configuration of the target network node.

In some embodiments, the processor is used to read the computer program in the memory and execute the following operation:
sending random access resource configuration information of one or more candidate network nodes to the terminal; the target network node being one or more network nodes among the candidate network nodes.

In some embodiments, when the dynamic scheduling information indicates a transmission resource allocated by a network node, the transmission resource allocated by the network node is determined based on the configuration information of the target network node, or determined based on the configuration information of the source network node;
the configuration information includes at least: physical layer resource configuration information and/or scheduling parameter configuration information.

In some embodiments, the processor is used to read the computer program in the memory and execute the following operation:
sending configuration information of one or more candidate network nodes to the terminal, the target network node being one or more network nodes among the candidate network nodes;
the configuration information of the candidate network nodes including at least: physical layer resource configuration information of the candidate network nodes and/or scheduling parameter configuration information of the candidate network nodes.

In some embodiments, the processor is used to read the computer program in the memory and execute the following operation:
sending first information to the target network node, the first information including related information of the transmission resource.

Embodiments of this disclosure provide a cross-node scheduling apparatus, including:
a first receiving unit, used to receive a dynamic scheduling information sent by a source network node; the dynamic scheduling information being used to activate a transmission resource and/or to schedule a transmission resource, the transmission resource being a transmission resource for data transmission between a terminal and a target network node;
a transmission unit, used to perform data transmission with the target network node according to the transmission resource.

Embodiments of this disclosure provide a cross-node scheduling apparatus, including:
a first sending unit, used to send a dynamic scheduling information to a terminal; the dynamic scheduling information being used to activate a transmission resource and/or to schedule a transmission resource, the transmission resource being for data transmission between the terminal and a target network node.

Embodiments of this disclosure provide a processor-readable storage medium, having a computer program stored thereon, the computer program, when executed by a processor, implementing steps of the above cross-node scheduling method.

The beneficial effects of the above technical solutions of this disclosure are:
In the embodiments of this disclosure, the source network node sends a dynamic scheduling information to the terminal for activating and/or scheduling a transmission resource for data transmission between the terminal and the target network node; the terminal performs data transmission with the target network node based on the transmission resource. This method can achieve dynamic scheduling by the source network node of transmission resources of the target network node under any network node deployment form, enable the terminal to dynamically initiate data transmission with any target network node, and simultaneously achieve on-demand activation of the target network node, thereby realizing network energy saving.

### BRIEF DESCRIPTION OF THE DRAWINGS

FIG. 1 is a first schematic flowchart of a cross-node scheduling method according to one or more embodiments of this disclosure;
FIG. 2 is a second schematic flowchart of a cross-node scheduling method according to one or more embodiments of this disclosure;
FIG. 3 is a third schematic flowchart of a cross-node scheduling method according to one or more embodiments of this disclosure;
FIG. 4 is a fourth schematic flowchart of a cross-node scheduling method according to one or more embodiments of this disclosure;
FIG. 5 is a fifth schematic flowchart of a cross-node scheduling method according to one or more embodiments of this disclosure;
FIG. 6 is a sixth schematic flowchart of a cross-node scheduling method according to one or more embodiments of this disclosure;
FIG. 7 is a first schematic structural diagram of a cross-node scheduling apparatus according to one or more embodiments of this disclosure;
FIG. 8 is a second schematic structural diagram of a cross-node scheduling apparatus according to one or more embodiments of this disclosure;
FIG. 9 is a schematic structural diagram of a terminal according to one or more embodiments of this disclosure; and
FIG. 10 is a schematic structural diagram of a network device according to one or more embodiments of this disclosure.

### DETAILED DESCRIPTION

To make the technical problems to be solved by this disclosure, the technical solutions, and the advantages clearer, the following will describe in detail in conjunction with the drawings and specific embodiments. In the following description, specific details such as specific configurations and components are provided only to help fully understand the embodiments of this disclosure. Therefore, it should be clear to those skilled in the art that various changes and modifications can be made to the embodiments described herein without departing from the scope and spirit of this disclosure. In addition, for clarity and conciseness, descriptions of known functions and constructions are omitted.

It should be understood that the "one embodiment" or "an embodiment" mentioned throughout the specification means that a particular feature, structure, or characteristic related to the embodiment is included in at least one embodiment of this disclosure. Therefore, the appearances of "in one embodiment" or "in an embodiment" in various places throughout the specification are not necessarily referring to the same embodiment. Furthermore, these particular features, structures, or characteristics may be combined in any suitable manner in one or more embodiments.

In various embodiments of this disclosure, it should be understood that the sequence numbers of the following processes do not imply the order of execution, and the execution order of the processes should be determined by their functions and internal logic, and should not constitute any limitation to the implementation process of the embodiments of this disclosure.

The term "and/or" in the embodiments of this disclosure describes an association relationship between associated objects, indicating that there may be three relationships, for example, A and/or B may indicate: A exists alone, A and B exist simultaneously, and B exists alone. The character "/" generally indicates that the associated objects have an "or" relationship.

The term "a plurality of" in the embodiments of this disclosure means two or more, and other quantifiers are similar.

The following will describe clearly and completely the technical solutions in the embodiments of this disclosure with reference to the drawings in the embodiments of this disclosure. Obviously, the described embodiments are only a part of the embodiments of this disclosure, rather than all embodiments. Based on the embodiments in this disclosure, all other embodiments obtained by those of ordinary skill in the art without creative efforts shall fall within the protection scope of this disclosure.

The embodiments of this disclosure provide a cross-node scheduling method, apparatus, terminal, and network device to solve the problem of cross-node scheduling in 6G systems.

The method and apparatus are based on the same application concept. Since the principles of solving problems by the method and apparatus are similar, the implementations of the apparatus and method can refer to each other, and repeated descriptions will be omitted.

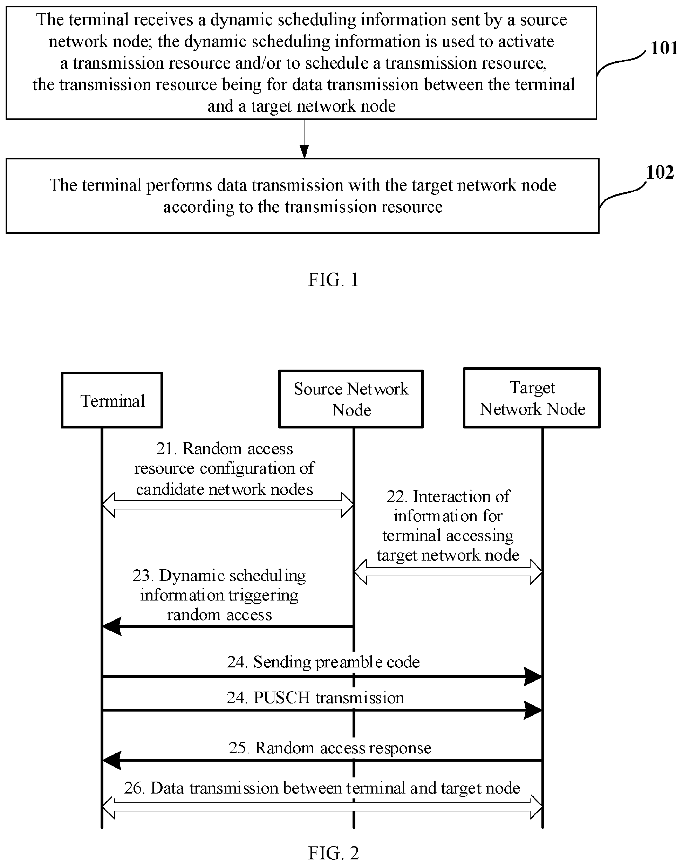

As shown in FIG. 1, one embodiment of this disclosure provides a cross-node scheduling method applied to a terminal, specifically including the following steps.
Step 101: the terminal receives a dynamic scheduling information sent by a source network node; the dynamic scheduling information is used to activate a transmission resource and/or to schedule a transmission resource, the transmission resource being for data transmission between the terminal and a target network node;
Step 102: the terminal performs data transmission with the target network node according to the transmission resource.

In this embodiment, the source network node is a current transmission node or cell of the terminal, and the target network node is a target transmission node or cell for cross-node transmission of the terminal. The source network node sends a dynamic scheduling information to the terminal for activating and/or scheduling cross-node transmission resources. The dynamic scheduling information may be used to activate a transmission resource for cross-node transmission, or may be used to schedule a transmission resource for cross-node transmission. Wherein, the scheduling transmission resource may refer to resource allocation.

In some embodiments, when the terminal performs data transmission with the target network node based on the transmission resource, the terminal may also perform data transmission with the source network node, including two transmission cases: (1) the source network node and the target network node use the same transmission resource to perform transmission with the terminal, i.e., joint transmission; and (2) the source network node and the target network node use different transmission resources to perform transmission with the terminal.

The network node in the embodiments of this disclosure is, for example, a transmission-reception point (TRP), a cell, or an available resource set. The available resource set refers to an entirety that can perform access, scheduling, and transmission for a terminal, and may include one or more TRPs or cells.

In the embodiments of this disclosure, the source network node sends a dynamic scheduling information to the terminal for activating and/or scheduling a transmission resource for data transmission between the terminal and the target network node; the terminal performs data transmission with the target network node based on the transmission resource. This method can achieve dynamic scheduling by the source network node of transmission resources of the target network node under any network node deployment form, enable the terminal to dynamically initiate data transmission with any target network node, and simultaneously achieve on-demand activation of the target network node, thereby realizing network energy saving.

In some embodiments, the dynamic scheduling information is carried by a MAC layer control signaling, and/or the dynamic scheduling information is carried by a PDCCH.

In this embodiment, the dynamic scheduling information for cross-node scheduling sent by the source network node may be carried by a MAC layer control signaling (such as a MAC control element (CE)) or a physical layer scheduling signaling PDCCH.

In some embodiments, the dynamic scheduling information includes at least one of the following information:
(1) An identifier of the target network node; for example: a TRP identifier (ID), a cell ID, an available resource set number, a beam direction, a reference signal number corresponding to a resource, etc.
(2) Random access resource indication information;
   In some embodiments, the random access resource indication information includes:
   Indication information for initiating a contention-free random access, including information of a resource for the contention-free random access; may include one or more of a dedicated physical random access channel (PRACH) indication, a preamble code indication, and a physical uplink shared channel (PUSCH) resource in a two-step random access (2-step RACH), and the information of the resource for the contention-free random access enables the target network node to uniquely identify the terminal;
      or
   Indication information for initiating a contention-based random access. In this case, the network node does not allocate a dedicated random access resource, and a fixed sequence may be used to notify the terminal to initiate a random access.
(3) A transmission resource allocated by a network node;

In some embodiments, the transmission resource allocated by the network node is determined based on configuration information of the source network node, or determined based on configuration information of the target network node; the configuration information includes at least: physical layer resource configuration information and/or scheduling parameter configuration information. It should be noted that the configuration information includes but is not limited to the above information, and other parameters may be allocated according to requirements. In some embodiments, the transmission resource allocated by the network node may include allocated physical layer resources and/or a transmission mode.

The physical layer resource configuration information and/or scheduling parameter configuration information is information content in serving cell configuration information (ServingCellConfig information), for example: downlink frequency and bandwidth, uplink frequency and bandwidth, PDCCH configuration, physical downlink shared channel (PDSCH) configuration, physical uplink shared channel (PUSCH) configuration, bandwidth part (BWP) configuration, reference signal configuration, etc.

In this embodiment, the transmission resource may be allocated by the source network node and notified to the terminal; or, the transmission resource may also be allocated by the target network node and notified to the source network node, and then notified to the terminal by the source network node.

### (4) Transmission delay indication information;

In some embodiments, the transmission delay indication information is used to indicate a transmission time of data transmission indicated by the dynamic scheduling information. That is, the transmission delay indication information may be used to indicate an actual transmission time of the transmission indicated by the dynamic scheduling information.

The transmission delay indication information includes at least one of the following:
1) An offset value of a transmission time of the data transmission indicated by the dynamic scheduling information relative to a transmission time of the dynamic scheduling information;
2) An activation time of the target network node and a transmission delay value. For example, TRP/cell activation time and value indicated by the transmission delay, the TRP/cell activation time may be pre-negotiated by the network side and the terminal or specified by a protocol, and if the TRP/cell is activated, the activation time is not added.
3) An absolute time when the data transmission indicated by the dynamic scheduling information takes effect.

In this embodiment, the transmission delay indication information may be used to indicate an actual transmission time of the transmission indicated by the dynamic scheduling information.

### (5) Downlink timing offset;

When the source network node and the target network node are not downlink synchronized, the dynamic scheduling information may be used to indicate a downlink time offset of the terminal initiating the transmission relative to current downlink timing.

(6) Uplink timing advance. It is used to indicate a timing advance for uplink transmission at the target network node, which may be indicated by a timing advance signaling (TAC).

(7) Activation state information of the source network node after the terminal receives the dynamic scheduling information. The activation state information having at least three options: activated state, deactivated state, and dormant state; the source network node may indicate through the dynamic scheduling information that the TRP/cell is subsequently in an activated state, a deactivated state, or a dormant state.

(8) An activated bandwidth part (BWP) of the target network node.

In some embodiments, when the dynamic scheduling information does not include the activated BWP of the target network node, the method further includes:
determining that a target BWP is the activated BWP of the target network node, the target BWP including one of the following:
an initial BWP of the target network node;
a preset BWP; and
a first pre-configured BWP.

In this embodiment, the dynamic scheduling information may indicate an actual BWP where the indicated resource is located. In some embodiments, if the dynamic scheduling information does not indicate the activated BWP, the terminal may perform transmission in the initial BWP of the target network node, or a default BWP, or a first activated BWP (first Active BWP) configured by the network side.

As an optional embodiment, before receiving the dynamic scheduling information sent by the source network node, the method further includes:
obtaining random access resource configuration information of one or more candidate network nodes, the target network node being one or more network nodes among the candidate network nodes;
the performing data transmission with the target network node according to the transmission resource includes:
   initiating a random access at the target network node according to a first random access resource indicated by the dynamic scheduling information, and performing data transmission with the target network node;
   wherein the first random access resource is determined according to a random access resource configuration of the target network node.

In this embodiment, the network side (which may be the source network node or another node, such as a central control node) pre-configures random access resource configurations of one or more candidate network nodes (such as TRPs or cells or available resource sets) for the terminal, and the random access resource configuration may include PRACH resources, preamble codes, PUSCH resource configuration information in 2-step RACH, etc.

The source network node uses the dynamic scheduling information to indicate that the terminal initiates a random access on the target network node. The dynamic scheduling information in this manner is a physical layer signaling (PDCCH order). After receiving the dynamic scheduling information, the terminal determines the indicated transmission resource and performs data transmission with the target network node based on the transmission resource. The random access resource indicated by the dynamic scheduling information in this embodiment is based on the random access resource configuration of the target network node.

It should be noted that: a network side node may refer to a TRP, or a cell, or an available resource set. The available resource set refers to an entirety that can perform access, scheduling, and transmission for a terminal, and may include one or more TRPs or cells.

The following describes with an example an implementation process in which the source network node sends a dynamic scheduling information to the terminal in this embodiment, and the terminal performs data transmission based on the transmission resource indicated by the dynamic scheduling information.

As shown in FIG. 2, the source network node triggers the terminal to initiate a random access and perform data transmission at the target network node, including:
Step 21: the network side configures random access resource configurations of candidate network nodes for the terminal. For the candidate network nodes, one or more of PRACH resources, preamble codes, and PUSCH resource configuration in 2-step RACH may be configured. This configuration is sent by the source network node to the terminal, or may be received by the terminal from another node and stored.
Step 22: the source network node and the target network node interact information about the terminal accessing the target network node, and determine a random access resource used by the terminal to access the target network node.
Step 23: the source network node sends a dynamic scheduling information to the terminal to trigger the terminal to initiate a random access. The dynamic scheduling information is specifically a PDCCH order, which carries one or more of the following information:
   1) An identifier of the target network node: for example, TRP ID, cell ID, available resource set number, beam direction, corresponding reference signal number.
   2) Random access resource indication information (mandatory): may include one or more of a dedicated PRACH indication, a preamble code indication, and a PUSCH resource in 2-step RACH; or, a fixed sequence is used to notify the terminal to initiate a contention-based random access. The random access resource is determined according to the random access resource configuration of the target network node configured in Step 21.
   3) Transmission delay indication information (optional): used to indicate that the terminal delays initiating the random access, or used to indicate a time when the terminal can initiate the random access.
   4) Downlink timing offset of the target network node (optional). In some embodiments, if the dynamic scheduling information does not have this parameter, the terminal initiates the random access based on a downlink timing value of the source network node, or the terminal pre-detects a downlink timing value of the candidate network node, and initiates the random access based on the pre-detected downlink timing value when initiating the random access.

Step 24: the terminal initiates a random access to the target network node according to the random access resource indication information obtained in Step 23.

Wherein, if Step 23 indicates a four-step (4-step) contention-free random access, the terminal initiates the random access using a dedicated PRACH and/or preamble, i.e., sending a dedicated preamble on a dedicated PRACH resource, or sending any preamble code available to the target network node on a dedicated PRACH resource, or sending a dedicated preamble on a PRACH resource available to the target network node.

If Step 23 indicates a two-step (2-step) contention-free random access, the terminal initiates the random access using a dedicated PRACH and/or preamble, and performs uplink transmission on a PUSCH resource corresponding to the dedicated PRACH and/or preamble.

If Step 23 indicates a contention-based random access, the terminal initiates the random access using a PRACH and preamble available to the target network node. If the target network node is configured with 2-step RACH, the terminal may send uplink data transmission on a PUSCH corresponding to the selected PRACH and preamble.

Step 25: the target network node sends a random access response message to the terminal. The random access response message carries indication information of an uplink timing advance of the target network node for the terminal.

Step 26: after completing the random access, the terminal performs data transmission with the target network node.

It should be noted that Steps 22 and 23 may be performed simultaneously.

In this embodiment, the network side pre-configures random access resource configurations of multiple candidate network nodes for the terminal, and the source network node indicates through the dynamic scheduling information that the terminal initiates a random access on the target network node, thereby achieving dynamic scheduling by the source network node of transmission resources of the target network node.

As another optional embodiment, the performing data transmission with the target network node according to the transmission resource includes:
initiating a random access with the target network node at the source network node according to a second random access resource indicated by the dynamic scheduling information, and performing data transmission with the target network node;
wherein the second random access resource is determined according to a random access resource configuration of the source network node.

In this embodiment, the source network node uses the dynamic scheduling information to trigger the terminal to initiate a random access. Parameters of the random access resource indicated in the dynamic scheduling information correspond to the configuration of the source network node, i.e., for the terminal, the terminal initiates the random access at the source network node. The target network node receives the random access initiated by the terminal, accesses the terminal, and performs subsequent transmission with the terminal. The dynamic scheduling information in this manner is a physical layer signaling PDCCH order.

In some embodiments, before the source network node sends the dynamic scheduling information to the terminal, the source network node sends related information of the transmission resource to the target network node, notifying the target network node of resource allocation parameters, such as physical layer resources, transmission mode, transmission time, etc.

The following describes with an example an implementation process in which the source network node sends a dynamic scheduling information to the terminal in this embodiment, and the terminal performs data transmission based on the transmission resource indicated by the dynamic scheduling information.

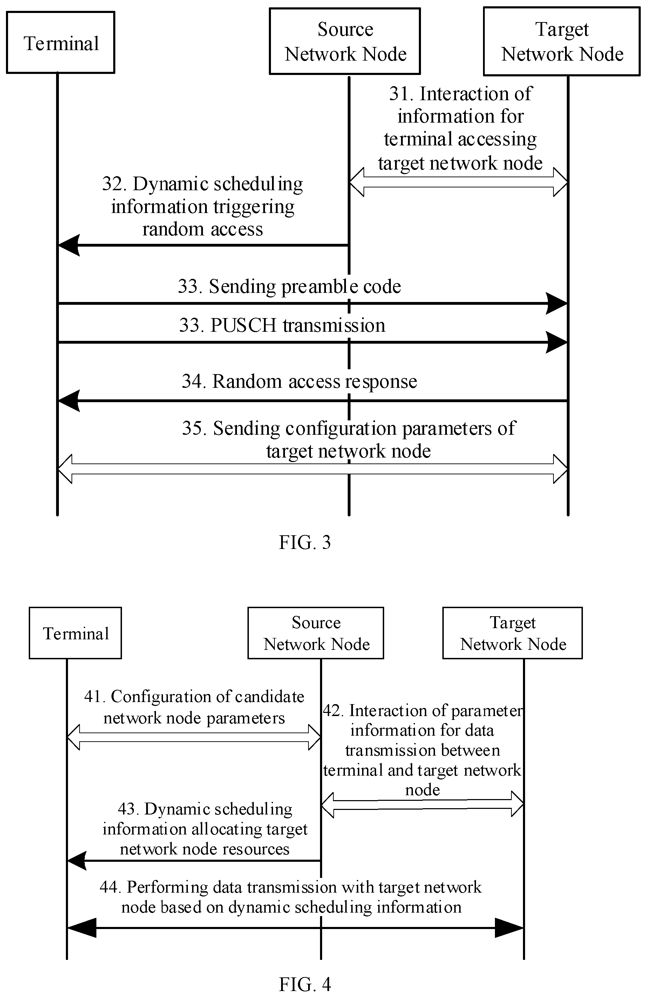

As shown in FIG. 3, the source network node triggers the terminal to initiate a random access and perform data transmission at the target network node, including:
Step 31: the source network node and the target network node interact information about the terminal accessing the target network node, and determine a random access resource used by the terminal to access the target network node.
Step 32: the source network node sends a dynamic scheduling information to the terminal to trigger the terminal to initiate a random access. The dynamic scheduling information is specifically a PDCCH order, which carries one or more of the following information:
   1) An identifier of the target network node (optional): such as TRP ID, cell ID, available resource set number, beam direction, corresponding reference signal number.
   2) Random access resource indication information (mandatory): may include one or more of a dedicated PRACH indication, a preamble code indication, and a PUSCH resource in 2-step RACH; or, the source network node uses a fixed sequence to notify the terminal to initiate a contention-based random access. The random access resource is determined according to the random access resource configuration of the source network node.
   3) Transmission delay indication information (optional): used to indicate that the terminal delays initiating the random access, or used to indicate a time when the terminal can initiate the random access.
   4) Downlink timing offset of the target network node (optional). In some embodiments, if the dynamic scheduling information does not have this parameter, the terminal initiates the random access based on a downlink timing value of the source network node, or the terminal pre-detects a downlink timing value of the candidate network node, and initiates the random access based on the pre-detected downlink timing value when initiating the random access.
Step 33: the terminal initiates a random access according to the random access resource indication information obtained in Step 32.

Wherein, if Step 32 indicates a four-step contention-free random access, the terminal initiates the random access using a dedicated PRACH and/or preamble.
If Step 32 indicates a two-step contention-free random access, the terminal initiates the random access using a dedicated PRACH and/or preamble, and sends uplink transmission on a PUSCH resource corresponding to the dedicated PRACH and/or preamble;
If Step 32 indicates a contention-based random access, the terminal initiates the random access using a PRACH and preamble available to the source network node. If the target network node is configured with 2-step RACH, the terminal may send uplink data transmission on a PUSCH corresponding to the selected PRACH and preamble.

Step 34: the target network node receives the random access request sent by the terminal and/or the corresponding PUSCH transmission. The target network node sends a random access response to the terminal. The random access response carries indication information of an uplink timing advance of the target network node for the terminal.

Step 35: the target network node sends configuration parameters of the target network node to the terminal. After completing the random access, the terminal may perform subsequent transmission with the target network node based on the configuration parameters of the target network node.

It should be noted that Steps 31 and 32 may be performed simultaneously.

In this embodiment, the network side does not pre-configure random access resources for the terminal. The source network node directly indicates through the dynamic scheduling information that the terminal initiates a random access. The indicated resource corresponds to the configuration of the source network node, and the target network node receives the random access of the terminal, thereby achieving dynamic scheduling by the source network node of transmission resources of the target network node.

As another optional embodiment, before receiving the dynamic scheduling information sent by the source network node, the method further includes:
obtaining configuration information of one or more candidate network nodes, the target network node being one or more network nodes among the candidate network nodes; the configuration information of the candidate network nodes including at least: physical layer resource configuration information of the candidate network nodes and/or scheduling parameter configuration information of the candidate network nodes;
the performing data transmission with the target network node according to the transmission resource includes:
   performing data transmission with the target network node according to a first allocated resource indicated by the dynamic scheduling information;
   wherein the first allocated resource is determined based on the configuration information of the target network node.

In this embodiment, the network side pre-configures one or more candidate network nodes (TRPs or cells or available resource sets) for the terminal, and physical layer resource configurations and scheduling parameter configurations of these candidate network nodes. The source network node sends a dynamic scheduling information to the terminal. The dynamic scheduling information carries a TRP ID or cell ID or available resource set number, used to indicate the TRP or cell or available resource set to be activated and/or scheduled, and allocates physical layer resources for transmission based on the resource configuration of the scheduled TRP or cell or available resource set. Wherein, the available resource set number is used to indicate physical layer resources and scheduling parameters of one or more TRPs/cells.

In some embodiments, if the TRP or cell indicated by the dynamic scheduling information was not previously activated, the dynamic scheduling information is simultaneously used to activate and schedule the TRP/cell/available resource set, and to schedule transmission on the TRP/cell/available resource set. The dynamic scheduling information in this manner is carried by physical layer signaling PDCCH or MAC CE.

The following describes with an example an implementation process in which the source network node sends a dynamic scheduling information to the terminal in this embodiment, and the terminal performs data transmission based on the transmission resource indicated by the dynamic scheduling information.

As shown in FIG. 4, the network side pre-configures configuration parameters of candidate network nodes, and the source network node uses the dynamic scheduling information to schedule transmission resources, including:
Step 41: the network side configures configuration parameters of candidate network nodes for the terminal, which may include physical layer resource configurations and scheduling parameter configurations of the target network node. This configuration may be sent by the source network node to the terminal, or may be received by the terminal from another network node and stored.
Step 42: the source network node and the target network node interact related parameter information for data transmission between the terminal and the target network node, and determine scheduling resources and data processing parameters used when the terminal performs transmission with the target network node.
Step 43: the source network node sends a dynamic scheduling information to the terminal for allocating resources of the target network node, indicating that the terminal performs data transmission at the target network node. The scheduling information carries one or more of the following information:
   1) An identifier of the target network node (mandatory): such as TRP ID, cell ID, available resource set number, beam direction, corresponding reference signal number.
   2) Allocated transmission resource (mandatory): may include physical layer resource allocation and transmission mode, the allocated transmission resource being determined based on the configuration information of the target network node configured in Step 41.
   3) Transmission delay indication information (optional): the transmission delay indication information is used to indicate an actual transmission time of the transmission indicated by the dynamic scheduling information.
   4) Downlink timing offset (optional). In some embodiments, if the dynamic scheduling information does not have this parameter, the terminal performs data transmission with the target network node based on a downlink timing value of the source network node, or the terminal pre-detects a downlink timing value of the candidate network node, and performs data transmission with the target network node based on the pre-detected downlink timing value.
   5) Uplink timing advance TAC (optional);
   6) Indication information that the TRP/cell is subsequently in an activated or deactivated or dormant state;
   7) An activated BWP of the target network node (TRP/cell), i.e., an actual BWP where the resource indicated by the dynamic scheduling information is located.

In some embodiments, if the dynamic scheduling information does not indicate the activated BWP, the terminal performs transmission in the initial BWP of the target network node, or a default BWP, or a first activated BWP (first Active BWP) configured by the network side.

Step 44: the terminal initiates data transmission to the target network node according to the dynamic scheduling information in Step 43. If Step 43 schedules downlink transmission, the terminal receives downlink transmission of the target network node according to the downlink resource allocated in Step 43, and the downlink transmission may include a TAC for the terminal to perform uplink transmission at the target network node. If Step 43 schedules uplink transmission, the terminal sends uplink transmission to the target network node based on the dynamic scheduling information.

It should be noted that Steps 42 and 43 may be performed simultaneously.

In this embodiment, the network side pre-configures configuration information of multiple candidate network nodes for the terminal, such as physical layer resources, scheduling parameters, etc. The source network node indicates through the dynamic scheduling information to the terminal the target network node and physical layer resources of the target network node, and the terminal performs data transmission with the target network node based on the physical layer resources, thereby achieving dynamic scheduling by the source network node of transmission resources of the target network node.

As another optional embodiment, the performing data transmission with the target network node according to the transmission resource includes:
performing data transmission with the target network node according to a second allocated resource indicated by the dynamic scheduling information;
wherein the second allocated resource is determined based on the configuration information of the source network node, the configuration information of the source network node including at least: physical layer resource configuration information of the source network node and/or scheduling parameter configuration information of the source network node.

In this embodiment, the network side has not previously notified the terminal of physical layer resource configurations and scheduling parameter configurations of candidate network nodes. The source network node uses resource allocation parameters of its own cell to allocate cross-node scheduling resources, and indicates a TRP ID, or cell ID, or beam direction, or reference signal number corresponding to the resource (the reference signal is associated with a beam direction or TRP or cell). In this manner, the terminal may obtain complete configuration parameters of the target network node through data transmitted by the scheduled resource or subsequent transmission. The dynamic scheduling information in this manner is carried by physical layer signaling PDCCH or MAC CE.

In some embodiments, before the source network node sends the dynamic scheduling information to the terminal, the source network node sends related information of the transmission resource to the target network node, notifying the target network node of resource allocation parameters, such as physical layer resources, transmission mode, transmission time, etc.

The following describes with an example an implementation process in which the source network node sends a dynamic scheduling information to the terminal in this embodiment, and the terminal performs data transmission based on the transmission resource indicated by the dynamic scheduling information.

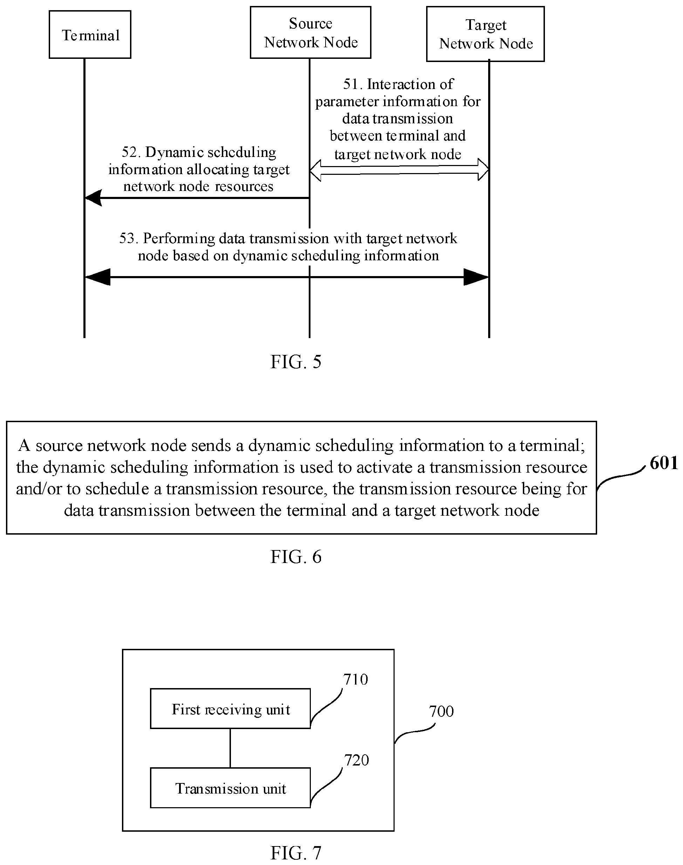

As shown in FIG. 5, the network side does not pre-configure configuration parameters of available candidate network nodes, and the source network node uses the dynamic scheduling information to schedule transmission resources, including:
Step 51: the source network node and the target network node interact related parameter information for data transmission between the terminal and the target network node, and determine scheduling resources and data processing parameters used when the terminal performs transmission with the target network node.
Step 52: the source network node sends a dynamic scheduling information to the terminal, indicating that the terminal performs data transmission at the target network node. The scheduling information carries one or more of the following information:
   1) An identifier of the target network node (optional): such as TRP ID, cell ID, available resource set number, beam direction, corresponding reference signal number.
   2) Allocated transmission resource (mandatory). It may include physical layer resource allocation and transmission mode, the allocated transmission resource being determined based on the configuration information of the source network node.
   3) Transmission delay indication information (optional). The transmission delay indication information is used to indicate an actual transmission time of the transmission indicated by the dynamic scheduling information.
   4) Downlink timing offset (optional). In some embodiments, if the dynamic scheduling information does not have this parameter, the terminal may perform transmission based on a downlink timing value of the source network node, or the terminal pre-detects a downlink timing value of the candidate network node, and performs transmission based on the pre-detected downlink timing value.
   5) Uplink timing advance TAC (optional);
   6) Indication information that the source network node (source TRP/cell) is subsequently in an activated or deactivated or dormant state.
   7) An activated BWP of the target network node (target TRP/cell), i.e., an actual BWP where the resource indicated by the dynamic scheduling information is located. In some embodiments, if the dynamic scheduling information does not indicate the activated BWP, the terminal performs data transmission in the initial BWP or default BWP of the target network node, or a first activated BWP configured by the network side.
Step 53: the terminal initiates data transmission to the target network node according to the dynamic scheduling information in Step 52. If Step 52 schedules downlink transmission, the target network node may include in the downlink transmission a TAC for the terminal to perform uplink transmission at the target network node, and/or complete configuration information of the target network node. If Step 52 schedules uplink transmission, the terminal sends uplink transmission to the target network node based on the dynamic scheduling information, and the target network node configures complete configuration parameters of the target network node for the terminal in subsequent transmission.

It should be noted that Steps 51 and 52 may be performed simultaneously.

In this embodiment, the network side does not pre-configure configuration information of candidate network nodes, and uses resource allocation parameters of the source network node's own cell to allocate cross-node scheduling resources, and indicates an identifier of the target network node corresponding to the resource. The terminal performs data transmission with the target network node based on the indicated transmission resource, thereby achieving dynamic scheduling by the source network node of transmission resources of the target network node.

In the embodiments of this disclosure, the source network node sends a dynamic scheduling information to the terminal for activating and/or scheduling a transmission resource for data transmission between the terminal and the target network node. The terminal performs data transmission with the target network node based on the transmission resource. This method can achieve dynamic scheduling by the source network node of transmission resources of the target network node under any network node deployment form, enable the terminal to dynamically initiate data transmission with any target network node, and simultaneously achieve on-demand activation of the target network node, thereby realizing network energy saving.

As shown in FIG. 6, an embodiment of this disclosure further provides a cross-node scheduling method applied to a network device, including:
Step 601: a source network node sends a dynamic scheduling information to a terminal; the dynamic scheduling information is used to activate a transmission resource and/or to schedule a transmission resource, the transmission resource being for data transmission between the terminal and a target network node.

In this embodiment, the source network node is a current transmission node or cell of the terminal, and the target network node is a target transmission node or cell for cross-node transmission of the terminal. The source network node sends a dynamic scheduling information to the terminal to activate and/or schedule cross-node transmission resources. The dynamic scheduling information may be used to activate a transmission resource for cross-node transmission, or may be used to schedule a transmission resource for cross-node transmission. Wherein, the scheduling transmission resource may refer to resource allocation.

In some embodiments, when the terminal performs data transmission with the target network node based on the transmission resource, the terminal may also perform data transmission with the source network node, including two transmission cases: (1) the source network node and the target network node use the same transmission resource to perform transmission with the terminal, i.e., joint transmission; and (2) the source network node and the target network node use different transmission resources to perform transmission with the terminal.

In the embodiments of this disclosure, the source network node sends a dynamic scheduling information to the terminal for activating and/or scheduling a transmission resource for data transmission between the terminal and the target network node. The terminal performs data transmission with the target network node based on the transmission resource. This method can achieve dynamic scheduling by the source network node of transmission resources of the target network node under any network node deployment form, enable the terminal to dynamically initiate data transmission with any target network node, and simultaneously achieve on-demand activation of the target network node, thereby realizing network energy saving.

In some embodiments, the dynamic scheduling information is carried by a MAC layer control signaling, and/or the dynamic scheduling information is carried by a PDCCH.

In this embodiment, the dynamic scheduling information for cross-node scheduling sent by the source network node may be carried by a MAC layer control signaling (such as a MAC CE) or a physical layer scheduling signaling PDCCH.

In some embodiments, the dynamic scheduling information includes at least one of the following information:
(1) An identifier of the target network node; for example: TRP ID, cell ID, available resource set number, beam direction, reference signal number corresponding to a resource, etc.
(2) Random access resource indication information;

In some embodiments, the random access resource indication information includes:
Indication information for initiating a contention-free random access, including information of a resource for the contention-free random access. It may include one or more of a dedicated PRACH indication, a preamble code indication, and a PUSCH resource in a two-step random access (2-step RACH), and the information of the resource for the contention-free random access enables the target network node to uniquely identify the terminal;
   or
Indication information for initiating a contention-based random access. In this case, the network node does not allocate a dedicated random access resource, and a fixed sequence may be used to notify the terminal to initiate a random access.

### (3) A transmission resource allocated by a network node;

In some embodiments, the transmission resource allocated by the network node is determined based on configuration information of the source network node, or determined based on configuration information of the target network node. The configuration information includes at least: physical layer resource configuration information and/or scheduling parameter configuration information. In some embodiments, the transmission resource allocated by the network node may include allocated physical layer resources and a transmission mode.

In this embodiment, the transmission resource may be allocated by the source network node and notified to the terminal; or, the transmission resource may also be allocated by the target network node and notified to the source network node, and then notified to the terminal by the source network node.

### (4) Transmission delay indication information;

In some embodiments, the transmission delay indication information is used to indicate a transmission time of data transmission indicated by the dynamic scheduling information. That is, the transmission delay indication information may be used to indicate an actual transmission time of the transmission indicated by the dynamic scheduling information.

The transmission delay indication information includes at least one of the following:
1) An offset value of a transmission time of the data transmission indicated by the dynamic scheduling information relative to a transmission time of the dynamic scheduling information;
2) An activation time of the target network node and a transmission delay value. For example, TRP/cell activation time and value indicated by the transmission delay, the TRP/cell activation time may be pre-negotiated by the network side and the terminal or specified by a protocol, and if the TRP/cell is activated, the activation time is not added.
3) An absolute time when the data transmission indicated by the dynamic scheduling information takes effect.

In this embodiment, the transmission delay indication information may be used to indicate an actual transmission time of the transmission indicated by the dynamic scheduling information.

### (5) Downlink timing offset;

When the source network node and the target network node are not downlink synchronized, the dynamic scheduling information may be used to indicate a downlink time offset of the terminal initiating the transmission relative to current downlink timing.

(6) Uplink timing advance. It is used to indicate a timing advance for uplink transmission at the target network node, which may be indicated by a timing advance signaling (TAC).

(7) Activation state information of the source network node after the terminal receives the dynamic scheduling information. The activation state information having at least three options: activated state, deactivated state, and dormant state. The source network node may indicate through the dynamic scheduling information that the TRP/cell is subsequently in an activated state, a deactivated state, or a dormant state.

(8) An activated bandwidth part (BWP) of the target network node.

In some embodiments, when the dynamic scheduling information does not include the activated BWP of the target network node, the method further includes:
determining that a target BWP is the activated BWP of the target network node, the target BWP including one of the following:
an initial BWP of the target network node;
a preset BWP; and
a first pre-configured BWP.

In this embodiment, the dynamic scheduling information may indicate an actual BWP where the indicated resource is located. In some embodiments, if the dynamic scheduling information does not indicate the activated BWP, the terminal may perform transmission in the initial BWP or default BWP of the target network node, or a first activated BWP configured by the network side.

As an optional embodiment, when the dynamic scheduling information indicates a random access resource, the random access resource is determined according to a random access resource configuration of the source network node, or determined according to a random access resource configuration of the target network node.

In this embodiment, the network side (which may be the source network node or another node, such as a central control node) pre-configures random access resource configurations of one or more candidate network nodes (such as TRPs or cells or available resource sets) for the terminal. The source network node uses the dynamic scheduling information to indicate that the terminal initiates a random access on the target network node. The dynamic scheduling information in this manner is a physical layer signaling PDCCH order. After receiving the dynamic scheduling information, the terminal determines the indicated transmission resource and performs data transmission with the target network node based on the transmission resource. The random access resource indicated by the dynamic scheduling information in this embodiment is based on the random access resource configuration of the target network node.

Alternatively, the network side does not pre-configure random access resources of candidate network nodes. The source network node uses the dynamic scheduling information to trigger the terminal to initiate a random access. Parameters of the random access resource indicated in the dynamic scheduling information are determined based on the configuration of the source network node. For the terminal, the terminal initiates the random access at the source network node. The target network node receives the random access initiated by the terminal, accesses the terminal, and performs subsequent transmission with the terminal. The dynamic scheduling information in this manner is a physical layer signaling PDCCH order.

As an optional embodiment, the method further includes:
sending random access resource configuration information of one or more candidate network nodes to the terminal; the target network node being one or more network nodes among the candidate network nodes.

In this embodiment, the source network node may pre-configure random access resource configurations of one or more candidate network nodes (such as TRPs or cells or available resource sets) for the terminal, and indicate through the dynamic scheduling information that the terminal initiates a random access on the target network node.

As an optional embodiment, when the dynamic scheduling information indicates a transmission resource allocated by a network node, the transmission resource allocated by the network node is determined based on the configuration information of the target network node, or determined based on the configuration information of the source network node. The configuration information includes at least: physical layer resource configuration information and/or scheduling parameter configuration information.

In this embodiment, the network side may pre-configure one or more candidate network nodes and physical layer resource configurations and scheduling parameter configurations of these candidate network nodes for the terminal. The source network node sends a dynamic scheduling information to the terminal for indicating the TRP or cell or available resource set to be activated and/or scheduled, and allocates physical layer resources for transmission based on the configuration information of the scheduled TRP or cell or available resource set.

Alternatively, the network side may not pre-configure physical layer resource configurations and scheduling parameter configurations of candidate network nodes for the terminal. The source network node uses resource allocation parameters of its own cell to allocate cross-node scheduling resources, and indicates through the dynamic scheduling information an identifier of the target network node corresponding to the resource. The dynamic scheduling information in this manner is carried by physical layer signaling PDCCH or MAC CE.

In some embodiments, the method further includes:
sending configuration information of one or more candidate network nodes to the terminal, the target network node being one or more network nodes among the candidate network nodes;
the configuration information of the candidate network nodes including at least: physical layer resource configuration information of the candidate network nodes and/or scheduling parameter configuration information of the candidate network nodes.

In this embodiment, the source network node may pre-configure one or more candidate network nodes and physical layer resource configurations and scheduling parameter configurations of these candidate network nodes for the terminal. The source network node indicates an identifier of the target network node through the dynamic scheduling information, and allocates physical layer resources for transmission based on the resource configuration of the target network node.

In some embodiments, the method further includes:
sending first information to the target network node, the first information including related information of the transmission resource.

In this embodiment, for a case where the network side does not pre-configure random access configurations or physical layer resource configurations of candidate network nodes for the terminal, before the source network node sends the dynamic scheduling information to the terminal, the source network node may send related information of the transmission resource to the target network node, notifying the target network node of resource allocation parameters, such as physical layer resources, transmission mode, transmission time, etc.

In the embodiments of this disclosure, the source network node sends a dynamic scheduling information to the terminal for activating and/or scheduling a transmission resource for data transmission between the terminal and the target network node. The terminal performs data transmission with the target network node based on the transmission resource. This method can achieve dynamic scheduling by the source network node of transmission resources of the target network node under any network node deployment form, enable the terminal to dynamically initiate data transmission with any target network node, and simultaneously achieve on-demand activation of the target network node, thereby realizing network energy saving.

The above embodiments have described the cross-node scheduling method of this disclosure. The following embodiments will further describe the corresponding apparatus in conjunction with the drawings.

Specifically, as shown in FIG. 7, an embodiment of this disclosure provides a cross-node scheduling apparatus 700 applied to a terminal, including:
a first receiving unit 710, used to receive a dynamic scheduling information sent by a source network node; the dynamic scheduling information being used to activate a transmission resource and/or to schedule a transmission resource, the transmission resource being for data transmission between the terminal and a target network node;
a transmission unit 720, used to perform data transmission with the target network node according to the transmission resource.

In some embodiments, the dynamic scheduling information is carried by a MAC layer control signaling, and/or the dynamic scheduling information is carried by a PDCCH.

In some embodiments, the dynamic scheduling information includes at least one of the following information:
an identifier of the target network node;
random access resource indication information;
a transmission resource allocated by a network node;
transmission delay indication information;
a downlink timing offset;
an uplink timing advance;
activation state information of the source network node after the terminal receives the dynamic scheduling information; and
an activated BWP of the target network node.

In some embodiments, the random access resource indication information includes:
indication information for initiating a contention-free random access, including information of a resource for the contention-free random access; or
indication information for initiating a contention-based random access.

In some embodiments, the transmission resource allocated by the network node is determined based on configuration information of the source network node, or determined based on configuration information of the target network node;
the configuration information includes at least: physical layer resource configuration information and/or scheduling parameter configuration information.

In some embodiments, the transmission delay indication information is used to indicate a transmission time of data transmission indicated by the dynamic scheduling information;
the transmission delay indication information includes at least one of the following:
an offset value of a transmission time of the data transmission indicated by the dynamic scheduling information relative to a transmission time of the dynamic scheduling information;
an activation time of the target network node and a transmission delay value; and
an absolute time when the data transmission indicated by the dynamic scheduling information takes effect.

In some embodiments, the apparatus further includes:
a first determining unit, used to determine that a target BWP is the activated BWP of the target network node, the target BWP including one of the following:
an initial BWP of the target network node;
a preset BWP; and
a first pre-configured BWP.

In some embodiments, the apparatus further includes:
a first obtaining unit, used to obtain random access resource configuration information of one or more candidate network nodes, the target network node being one or more network nodes among the candidate network nodes;
the transmission unit is specifically used to: initiate a random access at the target network node according to a first random access resource indicated by the dynamic scheduling information, and perform data transmission with the target network node;
wherein the first random access resource is determined according to a random access resource configuration of the target network node.

In some embodiments, the transmission unit is specifically used to:
initiate a random access with the target network node at the source network node according to a second random access resource indicated by the dynamic scheduling information, and perform data transmission with the target network node;
wherein the second random access resource is determined according to a random access resource configuration of the source network node.

In some embodiments, the apparatus further includes:
a second obtaining unit, used to obtain configuration information of one or more candidate network nodes, the target network node being one or more network nodes among the candidate network nodes; the configuration information of the candidate network nodes including at least: physical layer resource configuration information of the candidate network nodes and/or scheduling parameter configuration information of the candidate network nodes;
the transmission unit is specifically used to: perform data transmission with the target network node according to a first allocated resource indicated by the dynamic scheduling information;
wherein the first allocated resource is determined based on the configuration information of the target network node.

In some embodiments, the transmission unit is specifically used to:
perform data transmission with the target network node according to a second allocated resource indicated by the dynamic scheduling information;
wherein the second allocated resource is determined based on the configuration information of the source network node, the configuration information of the source network node including at least: physical layer resource configuration information of the source network node and/or scheduling parameter configuration information of the source network node.

It should be noted that the above apparatus provided by the embodiments of this disclosure can implement all method steps implemented by the method embodiments applied to the terminal described above, and can achieve the same technical effects. Therefore, repeated descriptions of the same parts and beneficial effects as those in the method embodiments will be omitted here.

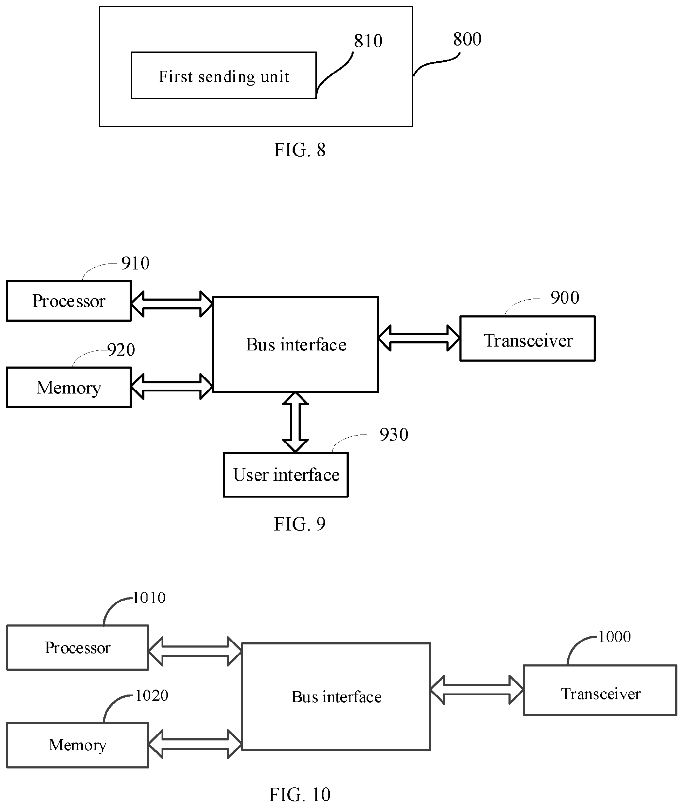

Specifically, as shown in FIG. 8, an embodiment of this disclosure provides a cross-node scheduling apparatus 800 applied to a network device, including:
a first sending unit 810, used to send a dynamic scheduling information to a terminal; the dynamic scheduling information being used to activate a transmission resource and/or to schedule a transmission resource, the transmission resource being for data transmission between the terminal and a target network node.

In some embodiments, the dynamic scheduling information is carried by a MAC layer control signaling, and/or the dynamic scheduling information is carried by a PDCCH.

In some embodiments, the dynamic scheduling information includes at least one of the following information:
an identifier of the target network node;
random access resource indication information;
a transmission resource allocated by a network node;
transmission delay indication information;
a downlink timing offset;
an uplink timing advance;
activation state information of the source network node after the terminal receives the dynamic scheduling information; and
an activated BWP of the target network node.

In some embodiments, the random access resource indication information includes:
indication information for initiating a contention-free random access, including information of a resource for the contention-free random access; or
indication information for initiating a contention-based random access.

In some embodiments, the transmission resource allocated by the network node is determined based on configuration information of the source network node, or determined based on configuration information of the target network node;
the configuration information includes at least: physical layer resource configuration information and/or scheduling parameter configuration information.

In some embodiments, the transmission delay indication information is used to indicate a transmission time of data transmission indicated by the dynamic scheduling information;
the transmission delay indication information includes at least one of the following:
an offset value of a transmission time of the data transmission indicated by the dynamic scheduling information relative to a transmission time of the dynamic scheduling information;
an activation time of the target network node and a transmission delay value; and
an absolute time when the data transmission indicated by the dynamic scheduling information takes effect.

In some embodiments, when the dynamic scheduling information indicates a random access resource, the random access resource is determined according to a random access resource configuration of the source network node, or determined according to a random access resource configuration of the target network node.

In some embodiments, the apparatus further includes:
a second sending unit, used to send random access resource configuration information of one or more candidate network nodes to the terminal; the target network node being one or more network nodes among the candidate network nodes.

In some embodiments, when the dynamic scheduling information indicates a transmission resource allocated by a network node, the transmission resource allocated by the network node is determined based on the configuration information of the target network node, or determined based on the configuration information of the source network node;
the configuration information includes at least: physical layer resource configuration information and/or scheduling parameter configuration information.

In some embodiments, the apparatus further includes:
a third sending unit, used to send configuration information of one or more candidate network nodes to the terminal, the target network node being one or more network nodes among the candidate network nodes;
the configuration information of the candidate network nodes including at least: physical layer resource configuration information of the candidate network nodes and/or scheduling parameter configuration information of the candidate network nodes.

In some embodiments, the apparatus further includes:
a fourth sending unit, used to send first information to the target network node, the first information including related information of the transmission resource.

It should be noted here that the above apparatus provided by the embodiments of this disclosure can implement all method steps implemented by the method embodiments applied to the network device described above, and can achieve the same technical effects. Therefore, repeated descriptions of the same parts and beneficial effects as those in the method embodiments will be omitted here.

It should be noted that the division of units in the embodiments of this disclosure is schematic, and is merely a logical function division. In actual implementation, there may be other division manners. In addition, in various embodiments of this disclosure, functional units may be integrated into one processing unit, or each unit may exist physically alone, or two or more units may be integrated into one unit. The above integrated unit may be implemented in the form of hardware, or may be implemented in the form of a software functional unit.

If the integrated unit is implemented in the form of a software functional unit and sold or used as an independent product, it may be stored in a processor-readable storage medium. Based on such understanding, the technical solutions of this disclosure essentially, or the part contributing to the related art, or all or part of the technical solutions may be embodied in the form of a software product. The computer software product is stored in a storage medium and includes several instructions to enable a computer device (which may be a personal computer, a server, or a network device, etc.) or a processor to execute all or part of the steps of the methods described in the various embodiments of this disclosure. The foregoing storage medium includes: a USB flash drive, a mobile hard disk, a read-only memory (ROM), a random access memory (RAM), a magnetic disk, an optical disk, or various other media that can store program codes.

As shown in FIG. 9, an embodiment of this disclosure further provides a terminal, including: a memory 920, a transceiver 900, and a processor 910; wherein, the memory 920 is used to store a computer program; the transceiver 900 is used to receive and send data under control of the processor 910; the processor 910 is used to read the computer program in the memory and execute the following operations:
receiving a dynamic scheduling information sent by a source network node; the dynamic scheduling information being used to activate a transmission resource and/or to schedule a transmission resource, the transmission resource being for data transmission between the terminal and a target network node; and
performing data transmission with the target network node according to the transmission resource.

In some embodiments, the dynamic scheduling information is carried by a MAC layer control signaling, and/or the dynamic scheduling information is carried by a PDCCH.

In some embodiments, the dynamic scheduling information includes at least one of the following information:
an identifier of the target network node;
random access resource indication information;
a transmission resource allocated by a network node;
transmission delay indication information;
a downlink timing offset;
an uplink timing advance;
activation state information of the source network node after the terminal receives the dynamic scheduling information; and
an activated BWP of the target network node.

In some embodiments, the random access resource indication information includes:
indication information for initiating a contention-free random access, including information of a resource for the contention-free random access; or
indication information for initiating a contention-based random access.

In some embodiments, the transmission resource allocated by the network node is determined based on configuration information of the source network node, or determined based on configuration information of the target network node;
the configuration information includes at least: physical layer resource configuration information and/or scheduling parameter configuration information.

In some embodiments, the transmission delay indication information is used to indicate a transmission time of data transmission indicated by the dynamic scheduling information;
the transmission delay indication information includes at least one of the following:
an offset value of a transmission time of the data transmission indicated by the dynamic scheduling information relative to a transmission time of the dynamic scheduling information;
an activation time of the target network node and a transmission delay value; and
an absolute time when the data transmission indicated by the dynamic scheduling information takes effect.

In some embodiments, the processor is used to read the computer program in the memory and execute the following operation:
determining that a target BWP is the activated BWP of the target network node, the target BWP including one of the following:
an initial BWP of the target network node;
a preset BWP; and
a first pre-configured BWP.

In some embodiments, the processor is used to read the computer program in the memory and execute the following operations:
obtaining random access resource configuration information of one or more candidate network nodes, the target network node being one or more network nodes among the candidate network nodes;
the performing data transmission with the target network node according to the transmission resource includes:
   initiating a random access at the target network node according to a first random access resource indicated by the dynamic scheduling information, and performing data transmission with the target network node;
   wherein the first random access resource is determined according to a random access resource configuration of the target network node.

In some embodiments, the processor is used to read the computer program in the memory and execute the following operation:
initiating a random access with the target network node at the source network node according to a second random access resource indicated by the dynamic scheduling information, and performing data transmission with the target network node;
wherein the second random access resource is determined according to a random access resource configuration of the source network node.

In some embodiments, the processor is used to read the computer program in the memory and execute the following operations:
obtaining configuration information of one or more candidate network nodes, the target network node being one or more network nodes among the candidate network nodes; the configuration information of the candidate network nodes including at least: physical layer resource configuration information of the candidate network nodes and/or scheduling parameter configuration information of the candidate network nodes;
performing data transmission with the target network node according to a first allocated resource indicated by the dynamic scheduling information;
wherein the first allocated resource is determined based on the configuration information of the target network node.

In some embodiments, the processor is used to read the computer program in the memory and execute the following operation:
performing data transmission with the target network node according to a second allocated resource indicated by the dynamic scheduling information;
wherein the second allocated resource is determined based on the configuration information of the source network node, the configuration information of the source network node including at least: physical layer resource configuration information of the source network node and/or scheduling parameter configuration information of the source network node.

Wherein, in FIG. 9, a bus architecture may include any number of interconnected buses and bridges, specifically linking together various circuits of one or more processors represented by the processor 910 and a memory represented by the memory 920. The bus architecture may also link together various other circuits such as peripheral devices, voltage regulators, and power management circuits, which are all well known in the art, and therefore, will not be further described herein. A bus interface provides an interface. The transceiver 900 may be multiple elements, i.e., including a transmitter and a transceiver, providing units for communicating with various other apparatuses on a transmission medium. For different user equipment, a user interface 930 may also be an interface capable of externally or internally connecting required devices. Connected devices include but are not limited to a keypad, a display, a speaker, a microphone, a joystick, etc.

The processor 910 is responsible for managing the bus architecture and general processing, and the memory 920 may store data used by the processor 910 when executing operations.

In some embodiments, the processor 910 may be a central processing unit (CPU), an application specific integrated circuit (ASIC), a field-programmable gate array (FPGA), or a complex programmable logic device (CPLD), and the processor may also adopt a multi-core architecture.

The processor implements any of the methods provided by the embodiments of this disclosure by invoking the computer program stored in the memory. The processor and the memory may also be physically arranged separately.

It should be noted that the above terminal provided by the embodiments of this disclosure can implement all method steps implemented by the method embodiments applied to the terminal described above, and can achieve the same technical effects. Therefore, repeated descriptions of the same parts and beneficial effects as those in the method embodiments will be omitted here.

As shown in FIG. 10, an embodiment of this disclosure further provides a network device, including: a memory 1020, a transceiver 1000, and a processor 1010; wherein, the memory 1020 is used to store a computer program; the transceiver 1000 is used to receive and send data under control of the processor 1010; the processor 1010 is used to read the computer program in the memory and execute steps of the cross-node scheduling method.

Specifically, the processor 1010 is used to read the computer program in the memory and execute the following operation:
sending a dynamic scheduling information to a terminal; the dynamic scheduling information being used to activate a transmission resource and/or to schedule a transmission resource, the transmission resource being for data transmission between the terminal and a target network node.

In some embodiments, the dynamic scheduling information is carried by a MAC layer control signaling, and/or the dynamic scheduling information is carried by a PDCCH.

In some embodiments, the dynamic scheduling information includes at least one of the following information:
an identifier of the target network node;
random access resource indication information;
a transmission resource allocated by a network node;
transmission delay indication information;
a downlink timing offset;
an uplink timing advance;
activation state information of the source network node after the terminal receives the dynamic scheduling information; and
an activated BWP of the target network node.

In some embodiments, the random access resource indication information includes:
indication information for initiating a contention-free random access, including information of a resource for the contention-free random access; or
indication information for initiating a contention-based random access.

In some embodiments, the transmission resource allocated by the network node is determined based on configuration information of the source network node, or determined based on configuration information of the target network node;
the configuration information includes at least: physical layer resource configuration information and/or scheduling parameter configuration information.

In some embodiments, the transmission delay indication information is used to indicate a transmission time of data transmission indicated by the dynamic scheduling information;
the transmission delay indication information includes at least one of the following:
an offset value of a transmission time of the data transmission indicated by the dynamic scheduling information relative to a transmission time of the dynamic scheduling information;
an activation time of the target network node and a transmission delay value; and
an absolute time when the data transmission indicated by the dynamic scheduling information takes effect.

In some embodiments, when the dynamic scheduling information indicates a random access resource, the random access resource is determined according to a random access resource configuration of the source network node, or determined according to a random access resource configuration of the target network node.

In some embodiments, the processor is used to read the computer program in the memory and execute the following operation:
sending random access resource configuration information of one or more candidate network nodes to the terminal; the target network node being one or more network nodes among the candidate network nodes.

In some embodiments, when the dynamic scheduling information indicates a transmission resource allocated by a network node, the transmission resource allocated by the network node is determined based on the configuration information of the target network node, or determined based on the configuration information of the source network node;
the configuration information includes at least: physical layer resource configuration information and/or scheduling parameter configuration information.

In some embodiments, the processor is used to read the computer program in the memory and execute the following operation:
sending configuration information of one or more candidate network nodes to the terminal, the target network node being one or more network nodes among the candidate network nodes;
the configuration information of the candidate network nodes including at least: physical layer resource configuration information of the candidate network nodes and/or scheduling parameter configuration information of the candidate network nodes.

In some embodiments, the processor is used to read the computer program in the memory and execute the following operation:
sending first information to the target network node, the first information including related information of the transmission resource.

Wherein, in FIG. 10, a bus architecture may include any number of interconnected buses and bridges, specifically linking together various circuits of one or more processors represented by the processor 1010 and a memory represented by the memory 1020. The bus architecture may also link together various other circuits such as peripheral devices, voltage regulators, and power management circuits, which are all well known in the art, and therefore, will not be further described herein. A bus interface provides an interface. The transceiver 1000 may be multiple elements, i.e., including a transmitter and a transceiver, providing units for communicating with various other apparatuses on a transmission medium. The processor 1010 is responsible for managing the bus architecture and general processing, and the memory 1020 may store data used by the processor 1010 when executing operations.

The processor 1010 may be a central processing unit (CPU), an application specific integrated circuit (ASIC), a field-programmable gate array (FPGA), or a complex programmable logic device (CPLD), and the processor may also adopt a multi-core architecture.

It should be noted here that the above network device provided by the embodiments of this disclosure can implement all method steps implemented by the method embodiments applied to the network device described above, and can achieve the same technical effects. Therefore, repeated descriptions of the same parts and beneficial effects as those in the method embodiments will be omitted here.

In addition, the embodiments of this disclosure further provide a processor-readable storage medium, having a computer program stored thereon, wherein the program, when executed by a processor, implements steps of the cross-node scheduling method described above, and can achieve the same technical effects. To avoid repetition, details are not described here again. Wherein, the readable storage medium may be any available medium or data storage device that can be accessed by the processor, including but not limited to magnetic storage devices (such as floppy disks, hard disks, tapes, magneto-optical (MO) disks, etc.), optical storage devices (such as compact disks (CDs), digital versatile discs (DVDs), Blu-ray discs (BDs), high-definition versatile discs (HVDs), etc.), and semiconductor storage devices (such as ROM, erasable programmable read-only memory (EPROM), electrically erasable programmable read-only memory (EEPROM), non-volatile memory (NAND FLASH), solid state disk (SSD), etc.).

It should be noted that the technical solutions provided by the embodiments of this disclosure can be applied to various systems, especially 5G systems. For example, applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems all include terminal devices and network devices. The systems may also include core network parts, such as an evolved packet system (EPS), a 5G system (5GS), etc.

The terminal device involved in the embodiments of this disclosure may refer to a device providing voice and/or data connectivity to a user, a handheld device having a wireless connection function, or another processing device connected to a wireless modem. In different systems, the name of the terminal device may also be different. For example, in a 5G system, the terminal device may be called user equipment (UE). A wireless terminal device may communicate with one or more core networks (CNs) through a radio access network (RAN). The wireless terminal device may be a mobile terminal device, such as a mobile phone (or called a "cellular" phone) and a computer having a mobile terminal device. For example, it may be a portable, pocket-sized, handheld, computer-built-in, or in-vehicle mobile device that exchanges voice and/or data with the RAN. For example, a personal communication service (PCS) phone, a cordless phone, a session initiated protocol (SIP) phone, a wireless local loop (WLL) station, a personal digital assistant (PDA), etc. The wireless terminal device may also be called a system, a subscriber unit, a subscriber station, a mobile station, a mobile, a remote station, an access point, a remote terminal, an access terminal, a user terminal, a user agent, a user device. The embodiments of this disclosure do not limit this.

The network device involved in the embodiments of this disclosure may be a base station, and the base station may include multiple cells serving terminals. According to different specific application occasions, the base station may also be called an access point, or may be a device in an access network that communicates with a wireless terminal device through one or more sectors on an air interface, or other names. The network device may be used to mutually convert received air frames with Internet Protocol (IP) packets, and serve as a router between the wireless terminal device and the rest of the access network, wherein the rest of the access network may include an Internet Protocol (IP) communication network. The network device may also coordinate attribute management of the air interface. For example, the network device involved in the embodiments of this disclosure may be a base transceiver station (BTS) in a global system for mobile communications (GSM) or code division multiple access (CDMA), or a NodeB in a wideband code division multiple access (WCDMA), or an evolutional Node B (eNB or e-NodeB) in a long term evolution (LTE) system, or a 5G base station (gNB) in a 5G network architecture (next generation system), or a home evolved Node B (HeNB), a relay node, a femto, a pico, etc. The embodiments of this disclosure do not limit this. In some network structures, the network device may include a centralized unit (CU) node and a distributed unit (DU) node, and the centralized unit and the distributed unit may also be geographically separated.

The network device and the terminal device may each use one or more antennas for multi-input multi-output (MIMO) transmission. The MIMO transmission may be single user MIMO (SU-MIMO) or multiple user MIMO (MU-MIMO). According to the form and number of antenna combinations, the MIMO transmission may be two-dimensional MIMO antenna (2D-MIMO), three-dimensional MIMO antenna (3D-MIMO), full dimension MIMO antenna (FD-MIMO), or massive MIMO antenna (massive-MIMO), or may also be diversity transmission, precoding transmission, or beamforming transmission, etc.

Those skilled in the art should understand that the embodiments of this disclosure may be provided as a method, a system, or a computer program product. Therefore, this disclosure may adopt the form of a complete hardware embodiment, a complete software embodiment, or an embodiment combining software and hardware. Moreover, this disclosure may adopt the form of a computer program product implemented on one or more computer-usable storage media (including but not limited to disk storage devices and optical storage devices, etc.) having computer-usable program codes stored thereon.

This disclosure is described with reference to flowcharts and/or block diagrams of methods, devices (systems), and computer program products according to embodiments of this disclosure. It should be understood that each process and/or block in the flowcharts and/or block diagrams, and combinations of processes and/or blocks in the flowcharts and/or block diagrams, may be implemented by computer-executable instructions. These computer-executable instructions may be provided to a processor of a general-purpose computer, a special-purpose computer, an embedded processor, or other programmable data processing devices to produce a machine, such that the instructions executed by the processor of the computer or other programmable data processing devices produce an apparatus for implementing the functions specified in one or more processes in the flowcharts and/or one or more blocks in the block diagrams.

These processor-executable instructions may also be stored in a processor-readable memory that can guide a computer or other programmable data processing devices to operate in a specific manner, such that the instructions stored in the processor-readable memory produce an article of manufacture including an instruction apparatus. The instruction apparatus implements the functions specified in one or more processes in the flowcharts and/or one or more blocks in the block diagrams.

These processor-executable instructions may also be loaded onto a computer or other programmable data processing devices, such that a series of operational steps are performed on the computer or other programmable devices to produce computer-implemented processing. Thus, the instructions executed on the computer or other programmable devices provide steps for implementing the functions specified in one or more processes in the flowcharts and/or one or more blocks in the block diagrams.

Obviously, those skilled in the art may make various modifications and variations to this disclosure without departing from the spirit and scope of this disclosure. Thus, if these modifications and variations of this disclosure fall within the scope of the claims of this disclosure and their equivalent technologies, this disclosure is also intended to include these modifications and variations.

## Claims

1. A cross-node scheduling method, comprising:
receiving, by a terminal, a dynamic scheduling information sent by a source network node; wherein the dynamic scheduling information is used to activate a transmission resource and/or to schedule a transmission resource, the transmission resource is used for data transmission between the terminal and a target network node; and
performing, by the terminal, data transmission with the target network node according to the transmission resource.

2. The method according to claim 1, wherein the dynamic scheduling information is carried by a medium access control (MAC) layer control signaling, and/or the dynamic scheduling information is carried by a physical downlink control channel (PDCCH).

3. The method according to claim 1, wherein the dynamic scheduling information comprises at least one of the following information:
an identifier of the target network node;
random access resource indication information;
a transmission resource allocated by a network node;
transmission delay indication information;
a downlink timing offset;
an uplink timing advance;
activation state information of the source network node after the terminal receives the dynamic scheduling information; or,
an activated bandwidth part (BWP) of the target network node.

4. The method according to claim 3, wherein the random access resource indication information comprises:
indication information for initiating a contention-free random access, comprising information of a resource for the contention-free random access; or
indication information for initiating a contention-based random access.

5. The method according to claim 3, wherein the transmission resource allocated by the network node is determined based on configuration information of the source network node, or determined based on configuration information of the target network node;
the configuration information at least comprises: physical layer resource configuration information and/or scheduling parameter configuration information.

6. The method according to claim 3, wherein the transmission delay indication information is used to indicate a transmission time of data transmission indicated by the dynamic scheduling information;
the transmission delay indication information comprises at least one of the following:
an offset value of a transmission time of the data transmission indicated by the dynamic scheduling information relative to a transmission time of the dynamic scheduling information;
an activation time of the target network node and a transmission delay value; and
an absolute time when the data transmission indicated by the dynamic scheduling information takes effect.

7. The method according to claim 3, wherein when the dynamic scheduling information does not comprise the activated BWP of the target network node, the method further comprises:
determining that a target BWP is the activated BWP of the target network node, the target BWP comprising one of the following:
an initial BWP of the target network node;
a preset BWP; and
a first pre-configured BWP.

8. The method according to claim 1, wherein before receiving the dynamic scheduling information sent by the source network node, the method further comprises:
obtaining random access resource configuration information of one or more candidate network nodes, wherein the target network node is one or more network nodes among the candidate network nodes;
the performing data transmission with the target network node according to the transmission resource comprises:
initiating a random access at the target network node according to a first random access resource indicated by the dynamic scheduling information, and performing data transmission with the target network node;
wherein the first random access resource is determined according to a random access resource configuration of the target network node.

9. The method according to claim 1, wherein the performing data transmission with the target network node according to the transmission resource comprises:
initiating a random access with the target network node at the source network node according to a second random access resource indicated by the dynamic scheduling information, and performing data transmission with the target network node;
wherein the second random access resource is determined according to a random access resource configuration of the source network node.

10. The method according to claim 1, wherein before receiving the dynamic scheduling information sent by the source network node, the method further comprises:
obtaining configuration information of one or more candidate network nodes, wherein the target network node is one or more network nodes among the candidate network nodes; the configuration information of the candidate network nodes at least comprises: physical layer resource configuration information of the candidate network nodes and/or scheduling parameter configuration information of the candidate network nodes;
the performing data transmission with the target network node according to the transmission resource comprises:
performing data transmission with the target network node according to a first allocated resource indicated by the dynamic scheduling information;
wherein the first allocated resource is determined based on configuration information of the target network node.

11. The method according to claim 1, wherein the performing data transmission with the target network node according to the transmission resource comprises:
performing data transmission with the target network node according to a second allocated resource indicated by the dynamic scheduling information;
wherein the second allocated resource is determined based on configuration information of the source network node, the configuration information of the source network node at least comprises: physical layer resource configuration information of the source network node and/or scheduling parameter configuration information of the source network node.

12. A cross-node scheduling method, comprising:
sending, by a source network node, a dynamic scheduling information to a terminal; wherein the dynamic scheduling information is used to activate a transmission resource and/or to schedule a transmission resource, the transmission resource is used for data transmission between the terminal and a target network node.

13. The method according to claim 12, wherein the dynamic scheduling information is carried by a medium access control (MAC) layer control signaling, and/or the dynamic scheduling information is carried by a PDCCH.

14. The method according to claim 12, wherein the dynamic scheduling information comprises at least one of the following information:
an identifier of the target network node;
random access resource indication information;
a transmission resource allocated by a network node;
transmission delay indication information;
a downlink timing offset;
an uplink timing advance;
activation state information of the source network node after the terminal receives the dynamic scheduling information; and
an activated BWP of the target network node.

15. The method according to claim 14, wherein the random access resource indication information comprises:
indication information for initiating a contention-free random access, comprising information of a resource for the contention-free random access; or
indication information for initiating a contention-based random access.

16. The method according to claim 14, wherein the transmission resource allocated by the network node is determined based on configuration information of the source network node, or determined based on configuration information of the target network node;
the configuration information at least comprises: physical layer resource configuration information and/or scheduling parameter configuration information.

17. The method according to claim 14, wherein the transmission delay indication information is used to indicate a transmission time of data transmission indicated by the dynamic scheduling information;
the transmission delay indication information comprises at least one of the following:
an offset value of a transmission time of the data transmission indicated by the dynamic scheduling information relative to a transmission time of the dynamic scheduling information;
an activation time of the target network node and a transmission delay value; and
an absolute time when the data transmission indicated by the dynamic scheduling information takes effect.

18. The method according to claim 12, wherein when the dynamic scheduling information indicates a random access resource, the random access resource is determined according to a random access resource configuration of the source network node, or determined according to a random access resource configuration of the target network node.

19. The method according to claim 12, wherein the method further comprises:
sending random access resource configuration information of one or more candidate network nodes to the terminal; wherein the target network node is one or more network nodes among the candidate network nodes.

20. The method according to claim 12, wherein when the dynamic scheduling information indicates a transmission resource allocated by a network node, the transmission resource allocated by the network node is determined based on configuration information of the target network node, or determined based on configuration information of the source network node;
the configuration information at least comprises: physical layer resource configuration information and/or scheduling parameter configuration information.

21. The method according to claim 12, wherein the method further comprises:
sending configuration information of one or more candidate network nodes to the terminal, wherein the target network node is one or more network nodes among the candidate network nodes;
the configuration information of the candidate network nodes at least comprising: physical layer resource configuration information of the candidate network nodes and/or scheduling parameter configuration information of the candidate network nodes.

22. The method according to claim 12, wherein the method further comprises:
sending first information to the target network node, wherein the first information comprises related information of the transmission resource.

23. A terminal, comprising: a memory, a transceiver, and a processor;
wherein the memory is used to store a computer program; the transceiver is used to receive and send data under control of the processor; the processor is used to read the computer program in the memory and execute the following operations:
receiving a dynamic scheduling information sent by a source network node; wherein the dynamic scheduling information is used to activate a transmission resource and/or to schedule a transmission resource, the transmission resource is used for data transmission between the terminal and a target network node; and
performing data transmission with the target network node according to the transmission resource.

24. The terminal according to claim 23, wherein the dynamic scheduling information is carried by a medium access control (MAC) layer control signaling, and/or the dynamic scheduling information is carried by a physical downlink control channel (PDCCH).

25. The terminal according to claim 23, wherein the dynamic scheduling information comprises at least one of the following information:
an identifier of the target network node;
random access resource indication information;
a transmission resource allocated by a network node;
transmission delay indication information;
a downlink timing offset;
an uplink timing advance;
activation state information of the source network node after the terminal receives the dynamic scheduling information; and
an activated bandwidth part (BWP) of the target network node.

26. The terminal according to claim 25, wherein the random access resource indication information comprises:
indication information for initiating a contention-free random access, comprising information of a resource for the contention-free random access; or
indication information for initiating a contention-based random access.

27. The terminal according to claim 25, wherein the transmission resource allocated by the network node is determined based on configuration information of the source network node, or determined based on configuration information of the target network node;
the configuration information at least comprises: physical layer resource configuration information and/or scheduling parameter configuration information.

28. The terminal according to claim 25, wherein the transmission delay indication information is used to indicate a transmission time of data transmission indicated by the dynamic scheduling information;
the transmission delay indication information comprises at least one of the following:
an offset value of a transmission time of the data transmission indicated by the dynamic scheduling information relative to a transmission time of the dynamic scheduling information;
an activation time of the target network node and a transmission delay value; and
an absolute time when the data transmission indicated by the dynamic scheduling information takes effect.

29. The terminal according to claim 25, wherein the processor is used to read the computer program in the memory and execute the following operation:
determining that a target BWP is the activated BWP of the target network node, wherein the target BWP comprises one of the following:
an initial BWP of the target network node;
a preset BWP; and
a first pre-configured BWP.

30. The terminal according to claim 23, wherein the processor is used to read the computer program in the memory and execute the following operations:
obtaining random access resource configuration information of one or more candidate network nodes, wherein the target network node is one or more network nodes among the candidate network nodes;
the performing data transmission with the target network node according to the transmission resource comprises:
initiating a random access at the target network node according to a first random access resource indicated by the dynamic scheduling information, and performing data transmission with the target network node;
wherein the first random access resource is determined according to a random access resource configuration of the target network node.

31. The terminal according to claim 23, wherein the processor is used to read the computer program in the memory and execute the following operation:
initiating a random access with the target network node at the source network node according to a second random access resource indicated by the dynamic scheduling information, and performing data transmission with the target network node;
wherein the second random access resource is determined according to a random access resource configuration of the source network node.

32. The terminal according to claim 23, wherein the processor is used to read the computer program in the memory and execute the following operations:
obtaining configuration information of one or more candidate network nodes, wherein the target network node is one or more network nodes among the candidate network nodes; the configuration information of the candidate network nodes at least comprises: physical layer resource configuration information of the candidate network nodes and/or scheduling parameter configuration information of the candidate network nodes;
performing data transmission with the target network node according to a first allocated resource indicated by the dynamic scheduling information;
wherein the first allocated resource is determined based on configuration information of the target network node.

33. The terminal according to claim 23, wherein the processor is used to read the computer program in the memory and execute the following operation:
performing data transmission with the target network node according to a second allocated resource indicated by the dynamic scheduling information;
wherein the second allocated resource is determined based on configuration information of the source network node, the configuration information of the source network node at least comprises at least: physical layer resource configuration information of the source network node and/or scheduling parameter configuration information of the source network node.

34. A network device, comprising: a memory, a transceiver, and a processor;
wherein the memory is used to store a computer program; the transceiver is used to receive and send data under control of the processor; the processor is used to read the computer program in the memory and execute steps of the cross-node scheduling method according to any one of claims 12 to 22.

35. A cross-node scheduling apparatus, comprising:
a first receiving unit, used to receive a dynamic scheduling information sent by a source network node; wherein the dynamic scheduling information is used to activate a transmission resource and/or to schedule a transmission resource, the transmission resource is used for data transmission between a terminal and a target network node;
a transmission unit, used to perform data transmission with the target network node according to the transmission resource.

36. The apparatus according to claim 35, wherein the dynamic scheduling information is carried by a medium access control (MAC) layer control signaling, and/or the dynamic scheduling information is carried by a physical downlink control channel (PDCCH).

37. The apparatus according to claim 35, wherein the dynamic scheduling information comprises at least one of the following information:
an identifier of the target network node;
random access resource indication information;
a transmission resource allocated by a network node;
transmission delay indication information;
a downlink timing offset;
an uplink timing advance;
activation state information of the source network node after the terminal receives the dynamic scheduling information; and
an activated bandwidth part (BWP) of the target network node.

38. The apparatus according to claim 37, wherein the random access resource indication information comprises:
indication information for initiating a contention-free random access, comprising information of a resource for the contention-free random access; or
indication information for initiating a contention-based random access.

39. The apparatus according to claim 37, wherein the transmission resource allocated by the network node is determined based on configuration information of the source network node, or determined based on configuration information of the target network node;
the configuration information at least comprises: physical layer resource configuration information and/or scheduling parameter configuration information.

40. The apparatus according to claim 37, wherein the transmission delay indication information is used to indicate a transmission time of data transmission indicated by the dynamic scheduling information;
the transmission delay indication information comprises at least one of the following:
an offset value of a transmission time of the data transmission indicated by the dynamic scheduling information relative to a transmission time of the dynamic scheduling information;
an activation time of the target network node and a transmission delay value; and
an absolute time when the data transmission indicated by the dynamic scheduling information takes effect.

41. The apparatus according to claim 37, wherein the apparatus further comprises:
a first determining unit, used to determine that a target BWP is the activated BWP of the target network node, wherein the target BWP comprises one of the following:
an initial BWP of the target network node;
a preset BWP; and
a first pre-configured BWP.

42. The apparatus according to claim 35, wherein the apparatus further comprises:
a first obtaining unit, used to obtain random access resource configuration information of one or more candidate network nodes, wherein the target network node is one or more network nodes among the candidate network nodes;
the transmission unit is used to: initiate a random access at the target network node according to a first random access resource indicated by the dynamic scheduling information, and perform data transmission with the target network node;
wherein the first random access resource is determined according to a random access resource configuration of the target network node.

43. The apparatus according to claim 35, wherein the transmission unit is used to:
initiate a random access with the target network node at the source network node according to a second random access resource indicated by the dynamic scheduling information, and perform data transmission with the target network node;
wherein the second random access resource is determined according to a random access resource configuration of the source network node.

44. The apparatus according to claim 35, wherein the apparatus further comprises:
a second obtaining unit, used to obtain configuration information of one or more candidate network nodes, wherein the target network node is one or more network nodes among the candidate network nodes; the configuration information of the candidate network nodes at least comprises: physical layer resource configuration information of the candidate network nodes and/or scheduling parameter configuration information of the candidate network nodes;
the transmission unit is used to: perform data transmission with the target network node according to a first allocated resource indicated by the dynamic scheduling information;
wherein the first allocated resource is determined based on the configuration information of the target network node.

45. The apparatus according to claim 35, wherein the transmission unit is used to:
perform data transmission with the target network node according to a second allocated resource indicated by the dynamic scheduling information;
wherein the second allocated resource is determined based on configuration information of the source network node, the configuration information of the source network node at least comprises: physical layer resource configuration information of the source network node and/or scheduling parameter configuration information of the source network node.

46. A cross-node scheduling apparatus, comprising:
a first sending unit, used to send a dynamic scheduling information to a terminal; wherein the dynamic scheduling information is used to activate a transmission resource and/or to schedule a transmission resource, the transmission resource is used for data transmission between the terminal and a target network node.

47. The apparatus according to claim 46, wherein the dynamic scheduling information is carried by a medium access control (MAC) layer control signaling, and/or the dynamic scheduling information is carried by a PDCCH.

48. The apparatus according to claim 46, wherein the dynamic scheduling information comprises at least one of the following information:
an identifier of the target network node;
random access resource indication information;
a transmission resource allocated by a network node;
transmission delay indication information;
a downlink timing offset;
an uplink timing advance;
activation state information of the source network node after the terminal receives the dynamic scheduling information; and
an activated BWP of the target network node.

49. The apparatus according to claim 48, wherein the random access resource indication information comprises:
indication information for initiating a contention-free random access, comprising information of a resource for the contention-free random access; or
indication information for initiating a contention-based random access.

50. The apparatus according to claim 48, wherein the transmission resource allocated by the network node is determined based on configuration information of the source network node, or determined based on configuration information of the target network node;
the configuration information at least comprises: physical layer resource configuration information and/or scheduling parameter configuration information.

51. The apparatus according to claim 48, wherein the transmission delay indication information is used to indicate a transmission time of data transmission indicated by the dynamic scheduling information;
the transmission delay indication information comprises at least one of the following:
an offset value of a transmission time of the data transmission indicated by the dynamic scheduling information relative to a transmission time of the dynamic scheduling information;
an activation time of the target network node and a transmission delay value; and
an absolute time when the data transmission indicated by the dynamic scheduling information takes effect.

52. The apparatus according to claim 46, wherein when the dynamic scheduling information indicates a random access resource, the random access resource is determined according to a random access resource configuration of the source network node, or determined according to a random access resource configuration of the target network node.

53. The apparatus according to claim 46, wherein the apparatus further comprises:
a second sending unit, used to send random access resource configuration information of one or more candidate network nodes to the terminal; wherein the target network node is one or more network nodes among the candidate network nodes.

54. The apparatus according to claim 46, wherein when the dynamic scheduling information indicates a transmission resource allocated by a network node, the transmission resource allocated by the network node is determined based on configuration information of the target network node, or determined based on configuration information of the source network node;
the configuration information at least comprises: physical layer resource configuration information and/or scheduling parameter configuration information.

55. The apparatus according to claim 46, wherein the apparatus further comprises:
a third sending unit, used to send configuration information of one or more candidate network nodes to the terminal, wherein the target network node is one or more network nodes among the candidate network nodes;
wherein configuration information of the candidate network nodes at least comprises: physical layer resource configuration information of the candidate network nodes and/or scheduling parameter configuration information of the candidate network nodes.

56. The apparatus according to claim 46, wherein the apparatus further comprises:
a fourth sending unit, used to send first information to the target network node, wherein the first information comprises related information of the transmission resource.

57. A processor-readable storage medium, having a computer program stored thereon, the computer program, when executed by a processor, implementing steps of the cross-node scheduling method according to any one of claims 1 to 11, or implementing steps of the cross-node scheduling method according to any one of claims 12 to 22.
